# EUROPÄISCHE PATENTSCHRIFT

(11) **EP 0 436 681 B1**
(45) Veröffentlichungstag und Bekanntmachung des Hinweises auf die Patenterteilung: **22.12.1993**
(21) Anmeldenummer: 90909610.9
(22) Anmeldetag: 12.07.1990
(51) Int. Cl.: E04B 1/88, B29C 67/24, B28B 11/08, B27N 7/00

(54) **VERFAHREN UND VORRICHTUNG ZUR HERSTELLUNG EINER KOMPRESSIBLEN ZONE IN MINDESTENS EINEM RANDBEREICH EINER WÄRME-, SCHALL- UND/ODER FEUERISOLIERENDEN MINERALFASERPLATTE ODER -BAHN SOWIE MINERALFASERPLATTEN HERGESTELLT NACH DEM VERFAHREN**
PROCESS AND DEVICE FOR OBTAINING A COMPRESSIBLE AREA IN AT LEAST ONE EDGE REGION OF A HEAT-INSULATING, SOUNDPROOFING AND/OR FIREPROOFING MINERAL FIBRE PANEL OR STRIP AND MINERAL FIBRE PANELS SO OBTAINED
PROCEDE ET REALISATION D'UNE ZONE COMPRESSIBLE DANS UNE REGION PERIPHERIQUE AU MOINS D'UNE PLAQUE OU D'UNE BANDE D'ISOLATION THERMIQUE, ACOUSTIQUE ET/OU IGNIFUGE EN FIBRES MINERALES, ET PLAQUES DE FIBRES MINERALES FABRIQUEES PAR CE PROCEDE

(30) Priorität: 31.07.1989 CH 2846/89
(43) Veröffentlichungstag der Anmeldung: 17.07.1991
(73) Patentinhaber: FLUMROC AG, CH-8890 Flums (CH)
(72) Erfinder: ZOGG, Hans, CH-9477 Trübbach (CH); WYSS, Peter, CH-7320 Sargans (CH)
(74) Vertreter: Riederer, Conrad A., Dr.
(86) Internationale Anmeldenummer: CH9000169
(87) Internationale Veröffentlichungsnummer: WO9102128

(56) Entgegenhaltungen:
- DE-A- 3 203 622
- GB-A- 2 162 791
- US-A- 4 483 904

## Beschreibung

Die Erfindung betrifft ein Verfahren zum Herstellen einer kompressiblen Zone in mindestens einem Randbereich einer wärme-, schall- und/oder feuerisolierenden Mineralfaserplatte oder -bahn, in welcher die einzelnen Fasern mit einem Bindemittel zu einem Faserverband verbunden sind, bei welchem Verfahren die Mineralfaserplatte oder -bahn unten und oben geführt, durch eine Walkzone bewegt und in der Walkzone zwecks Bildung der kompressiblen Zone der Faserverband durch mechanische Einwirkung teilweise aufgelöst wird.

Es ist herkömmliche Technik, Mineralfaserplatten und -bahnen dadurch zu erzeugen, dass man ein Haufwerk von Mineralfasern durch Verwendung von Bindemitteln, beispielsweise Phenolharz, zu einer Platte verklebt. Eine mit einer solchen Technik hergestellten Mineralfaserplatte ist relativ steif. Wenn man sie also zwischen Dachsparren unterschiedlicher lichter Weite einfügen will, kann dies nicht durch einfaches Zusammendrücken geschehen, zumindest dann nicht, wenn die Abstandsdifferenzen, wie üblich, mehr als ein bis zwei Zentimeter betragen. Man muss dann die Mineralfaserplatten entsprechend zuschneiden, was einen erheblichen Arbeits- und Zeitaufwand erfordert und zu einem Materialverlust führt. Nachteilig ist auch, dass beim Zuschneiden der Mineralfaserplatten relativ viel Mineralstaub entsteht. In der DE-A-32 03 622 ist daher bereits vorgeschlagen worden, die Randbereiche der Mineralfaserplatte oder -bahn derart zu bearbeiten, dass der Faserverband mindestens teilweise aufgelöst wird. Dadurch soll eine kompressible Zone geschaffen werden, die es ermöglicht, die Mineralfaserplatte auch zwischen Dachsparren einzufügen, wenn diese bis zu etwa 5 cm weniger voneinander beabstandet sind als die Mineralfaserplatte breit ist. Zur Bearbeitung des Randbereiches wird die Verwendung von Druckrollen vorgeschlagen, die paarweise unter einem spitzen Winkel zur Mittelebene der Mineralfaserplatte oder -bahn angeordnet sind, so dass sie den Randbereich zwischen sich einschliessen. Das Verfahren hat sich jedoch nicht bewährt und fand daher keine kommerzielle Anwendung. Ein Nachteil des Verfahrens besteht darin, dass es keine gleichmässige Lösung des Faserverbandes ermöglicht. Bei der Herstellung einer Mineralfaserplatte oder -bahn ist immer mit gewissen Inhomogenitäten zu rechnen, die sich dann beim Walken störend bemerkbar machen. Es entsteht ein Produkt, bei dem die gewalkte Zone unterschiedlich kompressibel ist. Durch solche Variationen der Kompressibilität kann die Montage der Platte oder Bahn erheblich behindert oder gar verunmöglicht werden. In der beschriebenen Weise gewalkte Isolierplatten haben die Tendenz, im gewalkten Bereich seitlich auszuknicken und bei oder nach der Montage wieder zwischen den Sparren herauszufallen.

Die DE-A-32 03 622 schlägt beiläufig auch den Ersatz der Druckrollen durch eine oder mehrere Pressplatten vor, die mit einem Antrieb zur Erzeugung einer Hin- und Herbewegung oder einer Schwingbewegung verbunden sind. Erfolgt das Walken mit einer seitlich auf die Mineralfaserbahn wirkende Pressplatte, so wird die Mineralfaserbahn über die ganze Breite komprimiert. Dies hat den Nachteil, dass der Faserverbund über die ganze Breite gelockert wird. Diese Lockerung ist relativ gering, so dass eine grosse Kraft notwendig ist, um die Platte zwischen die Dachsparren einzubauen. Andererseits bewirkt die Lockerung des Faserverbundes über die ganze Breite auch, dass die Mineralfaserplatte beim Einbau die Tendenz besitzt, auszubauchen. Es erstaunt daher nicht, dass das bekannte Verfahren keine praktische Anwendung gefunden hat.

Es ist daher Aufgabe der vorliegenden Erfindung, ein verbessertes Verfahren zur Herstellung von Mineralfaserplatten oder -bahnen der eingangs erwähnten Art zu schaffen.

Erfindungsgemäss wird dies dadurch erreicht, dass bei der Bildung der kompressiblen Zone der nicht zu dieser Zone gehörende Bereich der Mineralfaserplatte oder -bahn auf der Unter- und Oberseite abgestützt und senkrecht zur Platten-bzw. Bahnebene zusammengepresst wird, und dass das Material in der Walkzone durch Führungen, welche oberhalb und unterhalb der Mineralfaserplatte oder -bahn angeordnet sind, geführt wird, um ein Ausbauchen des Materials zu vermeiden.

Bei diesem Verfahren wird die Mineralfaserplatte während des Walkvorgangs sicher gehaltert und eine Auflösung des Faserverbandes im Bereich ausserhalb der Walkzone sicher vermieden. Dank der Führung des Materials in der Walkzone wird beim Walken ein Ausbauchen des Materials in der Randzone vermieden. Dies trägt erheblich zur gleichmässigen Ausbildung der kompressiblen Zone bei, sodass später beim Einbau der Mineralfaserplatte oder -bahn zwischen die Dachsparren ein Ausbauchen sicher verhindert wird. Die mit dem erfindungsgemässen Verfahren hergestellten Mineralfaserplatten oder -bahnen besitzen eine kompressible Zone mit wesentlich besseren Eigenschaften als die mit dem bekannten Verfahren hergestellten Mineralfaserplatten oder -bahnen.

Es hat sich als zweckmässig erwiesen, die Mineralfaserplatte oder -bahn beim Walken in dem nicht zur Walkzone gehörenden Bereich in der Dicke um etwa zehn Prozent dieser Dicke senkrecht zur Plattenebene zusammenzupressen. Nach diesem Zusammenpressen kehrt die Mineralfaserplatte elastisch wieder auf die ursprüngliche Dicke zurück. Vorzugsweise erfolgt die Bildung der kompressiblen Zone in mehreren Schritten, z.B. in zwei Schritten. Auf diese Weise wird eine progressiv abnehmende Auflösung des Faserverbandes von aussen nach innen erreicht. Die kompressible Zone ist also in der Nähe des Plattenrandes weicher als weiter entfernt davon. Dies trägt wesentlich zur Verhinderung des Ausknickens oder Ausbauchens der Mineralfaserplatte bei der Montage bei. Zweckmässigerweise erfolgt das Walken durch die mehrfache Hin- und Herbewegung eines Walkwerkzeuges beim Durchlauf der Mineralfaserplatte oder -bahn. Durch die Wahl der Walktiefe und der Anzahl der Hin- und Herbewegungen oder Hüben des Walkwerkzeuges kann der gewünschte Grad der Kompressibilität der kompressiblen Zone der Isolierplatte eingestellt werden. Die Kompressibilität wird vorteilhaft so gewählt, dass beim Einbau der Mineralfaserplatte zwischen die Dachsparren eine Kraft von etwa achtzehn bis fünfundzwanzig Kilogramm pro Laufmeter erforderlich ist. Es kamnn aber durch einfache Erhöhung oder Reduktion der Hubzahl speziellen Kundenwünschen entsprochen werden.

Es hat sich als vorteilhaft erwiesen, wenn beim ersten Schritt ein Walken mit etwa zwanzig Prozent mehr Hüben als beim zwei ten Schritt erfolgt. Vorteilhaft hat sich erwiesen, das Walken in total vierzig bis fünfundvierzig Hüben pro Laufmeter vorzunehmen. Es wird somit das Material der Randzone einer mehrfachen Kompression und Dekompression ausgesetzt, welche die gewünschte Lockerung des Faserverbandes vornimmt. Zweckmassigerweise wird beim ersten Schritt ein Walken bis zu einer Tiefe von etwa acht Zentimetern vorgenommen, worauf dann im zweiten Schritt ein Walken bis zu einer Tiefe von etwa elf Zentimetern erfolgt. Auf diese Weise kann eine relativ breite kompressible Zone erreicht werden, welche bei der Montage eine Kompression von rund 5 cm erlaubt. Mit anderen Worten, eine beispielsweise 56 cm breite Platte kann für den Einbau zwischen Sparren mit einem Abstand von 55 bis 50 cm verwendet werden.

Die Erfindung betrifft auch eine Vorrichtung zur Durchführung des Verfahrens, mit mindestens einem Walkwerkzeug, das derart angeordnet ist, dass es Hin- und Herbewegungen ausführt und dadurch von der Seite her den Randbereich der Mineralfaserplatte oder -bahn walkt, mit endlosen Förderbändern, welche gleichzeitig der Führung der Mineralfaserplatte oder -bahn und der Erzeugung einer Relativbewegung zwischen Mineralfaserplatte oder -bahn und dem Walkwerkzeug dienen. Erfindungsgemäss ist diese Vorrichtung dadurch gekennzeichnet, dass der Abstand zwischen den Förderbändern kleiner ist als die Dicke der zu bearbeitenden Mineralfaserplatten oder -bahn, um die Mineralfaserplatte oder -bahn senkrecht zur Platten- bzw. Bahnebene zusammenzupressen, und dass unterhalb und oberhalb der Walkzone eine Führung angeordnet ist, um ein Ausbauchen des Materials beim Walken zu vermeiden.
Diese Vorrichtung ist relativ einfach im Aufbau und eignet sich sehr gut zur Durchführung des erfindungsgemässen Verfahrens. Zweckmässigerweise sind zwei Walkwerkzeuge vorgesehen, wobei das erste Walkwerkzeug dem Vorwalken und das zweite Walkwerkzeug dem Walken auf die ganze Tiefe dient. Das Vorwalken erfolgt auf eine Tiefe von etwa acht Zentimetern, das Walken auf eine Tiefe von etwa elf Zentimetern. Auf diese Weise wird eine kompressible Zone erzeugt, die progressiv von aussen nach innen weniger leicht kompressibel ist. Dadurch wird die Gefahr eines Ausbuchtens der Mineralfaserplatte oder -bahn bei der Montage zwischen den Sparren vermieden.

Zweckmässigerweise ist oberhalb und unterhalb der Walkzone eine Führung angeordnet, um ein Ausbauchen des Materials beim Walken zu vermeiden. Dies trägt zur Ausbildung einer idealen kompressiblen Zone bei.

Jede Führung kann auf der Innenseite einen Wulst aufweisen, welcher sich entlang des den Abstützmitteln benachbarten Randes erstreckt. Es wäre aber auch möglich, die Führung der Länge nach nach innen etwas abzukanten. Durch den Wulst oder den abgekanteten Teil wird eine Verengung erreicht, wodurch verhindert wird, dass beim Walken Material gegen die Kante des endlosen Bandes gedrückt wird und die Oberfläche der Mineralfaserplatte in diesem Bereich Schaden leidet. Die Abstützung des nicht zur Walkzone gehörenden Bereichs der Mineralfaserplatte oder -bahn kann auf verschiedene Weise geschehen. Als sehr vorteilhaft haben sich endlose Noppenbänder erwiesen, welche sich mit der Mineralfaserplatte oder -bahn bewegen bzw. diese fördern. Dies hat den Vorteil, dass die Noppen der Noppenbänder etwas in die Oberfläche der Mineralfaserplatte eindringen und eine Kompression der Mineralfaserplatte oder -bahn im abgestützten Bereich verhindern. Dadurch wird beim Walken die teilweise Auflösung des Fasernverbandes auf das Gebiet der Knautschzone beschränkt. Eine zweckmässige Ausführungsform der Erfindung sieht vor, dass das Walkwerkzeug einen Stempel aufweist, der eine zylindrisch gewölbte Fläche besitzt. Dies ermöglicht ein schonendes Walken. Zweckmässigerweise ist der Stempel mit einem endlosen Band versehen, welches über die zylindrisch gewölbte Fläche verläuft und mit praktisch doppelter Geschwindigkeit wie die Mineralfaserplatte oder -bahn und im Gleichlauf mit derselben bewegt wird. Versuche haben gezeigt, dass bei der doppelten Geschwindigkeit des endlosen Bandes die Mineralfaserplatte oder -bahn nicht rückwärts gestaucht wird. Diese Massnahmen tragen somit zu einer schonenden Behandlung des Materials bei.

Der Stempel weist vorteilhaft an jedem Ende der gewölbten Fläche eine Umlenkrolle für das endlose Band auf. Dabei kann mindestens eine dieser Rollen dem Antrieb des Bandes dienen. Dies ergibt eine relativ einfache Konstruktion des Walkwerkzeugs.

Der Stempel weist zweckmässigerweise im Bereich einer Umlenkrolle eine Schwenkachse auf, um welche er verschwenkbar ist, wobei in einem Abstand vom Schwenkpunkt ein Kurbeltrieb angeordnet sein kann, um den Stempel hin und her zu schwenken. Diese Konstruktion hat sich als vorteilhaft zur schonenden Behandlung des der zu bearbeitenden Mineralfaserplatten oder - -bahnen erwiesen.

Die Erfindung betrifft auch eine Mineralfaserplatte oder -bahn mit mindestens einer kompressiblen Zone, hergestellt nach dem erfindungsgemässen Verfahren. Diese Mineralfaserplatte oder - bahn kann auch auf mehreren Seiten, insbesondere auf zwei einander gegenüberliegenden Seiten, eine kompressible Zone aufweisen. Es hat sich aber als zweckmässig und kostengünstig erwiesen, lediglich auf einer Seite eine kompressible Zone vorzusehen. Mineralfaserplatten oder -bahnen dieser Art eignen sich zum Einbau bei unterschiedlichen Sparrenabständen. Sie halten sich selbst, ohne die Hinterlüftung zu gefährden. Es ist in der Regel kein Zuschnitt nötig. Zweckmässigerweise werden Mineralfaserplatten oder -bahnen mit verschiedenen Breiten geliefert. Eine Breite von einundfünfzig Zentimetern eignet sich zum Einbau bei einem Sparrenabstand von sechsundvierzig bis fünfzig Zentimeter, eine Breite von sechsundfünfzig Zentimeter eignet sich zum Einbau beim Sparrenabstand von einundfünfzig bis fünfundfünfzig Zentimeter, usw.

Von grossem Vorteil ist, dass sich die Mineralfaserplatte oder -bahn dem Schwund oder Verwerfen der Holzkonstruktion anpasst. Dies ist von besonderer Bedeutung, weil heute praktisch immer grünes Holz für Dachkonstruktionen verwendet wird.

Da kein Zuschnitt notwendig ist, ergibt sich bei der Verarbeitung auf dem Bau praktisch keine Staubentwicklung. Die erfindungsgemässe Mineralfaserplatte oder -bahn ist somit hautfreundlicher als die bekannten Produkte dieser Art. Messungen haben ergeben, dass die Staubentwicklung etwa fünfmal kleiner ist als bei der Bearbeitung der bisherigen Produkte, die zugeschnitten werden müssen.

Die Mineralfaserplatte besitzt vorteilhaft eine kompressible Zone, welche so beschaffen ist, dass die Platte zum Einbau eine Kraft von etwa achtzehn bis vierundzwanzig Kilogramm pro Laufmeter erfordert. Dies ermöglicht einen problemlosen Einbau und gewährleistet auch eine genügende Haltekraft für die eingebaute Mineralfaserplatte.

Ausführungsbeispiele der Erfindung werden nun unter Bezugnahme auf die Zeichnung beschrieben. Es zeigt:
- Fig. 1: eine schematische Darstellung einer zweistufigen Walkvorrichtung,
- Fig. 2: einen Schnitt entlang der Linie II-II von Fig. 1 und
- Fig. 3: einen Schnitt wie in Fig. 2 einer Walkvorrichtung, welche gleichzeitig eine Mehrzahl von Mineralfaserfaserplatten oder -bahnen bearbeitet.

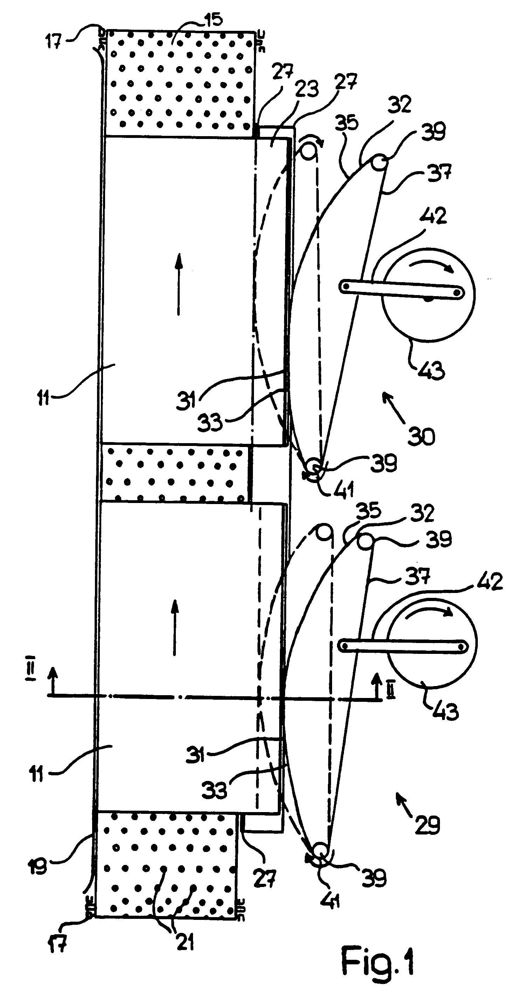

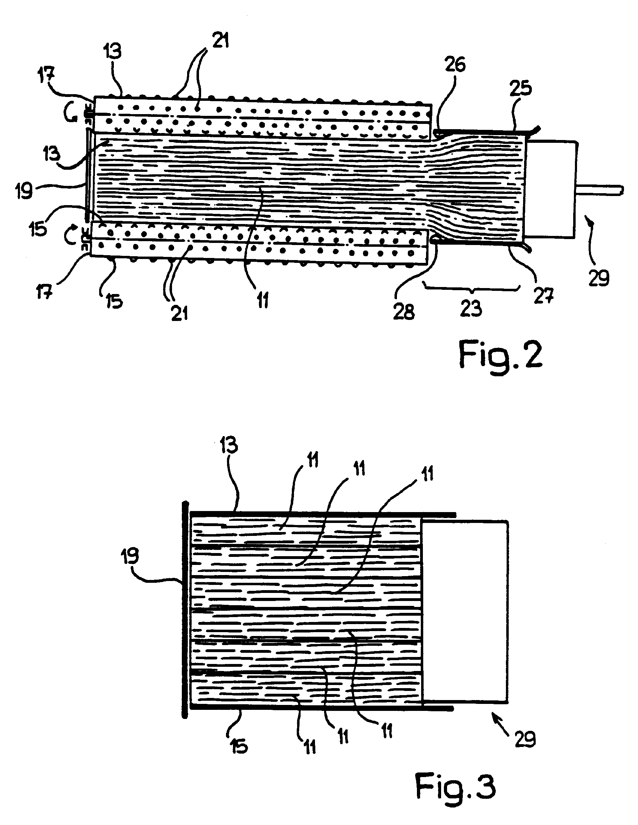

Die in Fig. 1 und 2 dargestellte Walkvorrichtung besitzt für den Transport der Platten 11 zwei endlose Noppenbänder 13, 15, von denen in Fig. 1 das obere Noppenband aus Darstellungsgründen weggelassen wurde. Die Noppenbänder 13, 15 dienen nicht nur dem Transport der Mineralfaserplatten 11, sondern auch zum Festhalten derselben beim Walken. Um dies zu gewährleisten, wird der Abstand zwischen den Noppenbändern etwa zehn Prozent kleiner eingestellt als die Dicke der zu bearbeitenden Mineralfaserplatte oder -bahn. Die Einstellung kann durch einen nicht dargestellten Verstellmechanismus geschehen, welcher es erlaubt, die Vorrichtung in kurzer Zeit auf eine andere Plattendicke umzustellen. Dem Antrieb und der Führung der endlosen Noppenbänder 13, 15 dient eine Anzahl von Rollen 17. Zur seitlichen Führung der Platten 11 dient das Führungsblech 19. Normalerweise genügen aber die in Fig. 1 dargestellten Noppen 21 zur Halterung der Platten 11 bei der Einwirkung von seitlichen Kräften beim Walkvorgang.

Bei der Vorrichtung ist mit der Bezugsziffer 23 der Bereich der Walkzone dargestellt. Bei der fertig bearbeiteten Isolierplatte wird dann der gewalkte Bereich als kompressible Zone bezeichnet. In der Walkzone 23 ist oberhalb und unterhalb der Mineralfaserplatte 11 eine Führung 25 bzw. 27 vorgesehen. Diese verhindert beim Walken ein Ausbauchen des Materials der Walkzone. Durch die Wülste 26, 28 wird eine Verengung erreicht, die verhindert, dass Plattenmaterial gegen die Kanten der endlosen Noppenbänder 13, 15 gedrückt wird.

Die gezeigte Vorrichtung ist zum Walken in zwei Schritten vorgesehen, wobei im ersten Schritt ein Vorwalken bis zu etwa acht Zentimeter Tiefe und im zweiten Schritt ein Walken bis zu etwa elf Zentimeter Tiefe erfolgt. Die Walkvorrichtung besitzt daher zwei Walkwerkzeuge 29, 30, die zweckmässigerweise gleich ausgebildet sind, wobei aber der Hub des Werkzeugs 29 auf etwa acht Zentimeter und der Hub des Werkzeugs 30 auf etwa elf Zentimeter eingestellt ist. Die Walkwerkzeuge 29, 30 sind derart angeordnet, dass sie Hin- und Herbewegungen ausführen, um von der Seite her den Randbereich 23 der Mineralfaserplatte 11 zu walken. Die Walkwerkzeuge 29, 30 weisen eine ungefähr zylindrisch gewölbte Fläche 31 auf. Der Anfangsabschnitt 33 dieser Fläche 31 erstreckt sich über etwa zwei Drittel des Werkzeuges und besitzt vorteilhaft einen Radius von etwa 125 Zentimeter. Der Endabschnitt 35, welcher sich über etwa einen Drittel der Länge des Werkzeuges erstreckt, besitzt vorteilhaft einen Radius von etwa sechzig Zentimeter. Bei der dargestellten Ausführungsform ist der Stempel 32 des Walkwerkzeuges mit einem endlosen Band 37 versehen, welches über die gewölbte Fläche 31 verläuft und mit praktisch der doppelten Geschwindigkeit wie die Mineralfaserplatte 11 bewegt wird. Im Kontaktbereich ist der Richtungssinn des Bandes 37 praktisch derselbe wie jener der Mineralfaserplatte 11. Das Band 37 läuft über Umlenkrollen 39, die an den beiden Enden der gewölbten Fläche 31 des Stempels angeordnet sind. Der Stempel 32 besitzt im Bereich der vorderen Umlenkrolle 39 eine Schwenkachse 41. Es kann dies die gleiche Achse sein, welche auch der vorderen Umlenkrolle 39 dient. In einem Abstand von der Schwenkachse 41 ist der Arm 42 des Kurbeltriebs 43 angelenkt, welcher dazu dient, beim Durchlauf einer Platte 11 eine Anzahl von Hin- und Herbewegungen des Stempels zu bewirken.

Im Betrieb der Walkvorrichtung werden dieser nacheinander Mineralfaserplatten 11 zugeführt. Die Mineralfaserplatten 11 werden von den Noppenbändern 13, 15 erfasst und während des Durchlaufs durch die Vorrichtung fest gehaltert. In der ersten Walkphase wird der Randbereich 23 der Mineralfaserplatte 11 durch etwa zwanzig bis fünfundzwanzig Hübe auf etwa sechs bis acht Zentimeter Tiefe vorgewalkt. In der zweiten Walkphase erfolgt durch etwa achtzehn bis zweiundzwanzig Hübe ein Walken auf etwa elf Zentimeter Tiefe. Generell sollte die Zahl der Hübe in der ersten Phase etwa zwanzig Prozent höher sein als in der zweiten Phase. Beim Walken verhindern die Führungen 25, 27 ein Ausbauchen. Dank des grossen Radius der Stempel und des mitfahrenden Bandes 37 erfolgt das Walken auf schonende Weise, ohne dass der Plattenrand verletzt wird.

Es ist möglich, die Walktiefe und die Anzahl der Hübe der Walkwerkzeuge von Produkt zu Produkt einzustellen, um die gewünschte Kompressionskraft zu erhalten. Die Kraft, um eine Platte von einem Meter Länge und sechsundfünfzig Zentimeter Breite auf den engsten Sparrenabstand von etwa fünfzig bis einundfünfzig Zentimeter zu bringen, sollte je nach Plattenstärke bei etwa achtzehn bis fünfundzwanzig Kilogramm liegen.

Die beschriebene Walkvorrichtung eignet sich nicht nur zum Walken von Mineralfaserplatten. Sie kann ebenfalls zum Walken von Mineralfaserbahnen verwendet werden.

Es sind verschiedene Aenderungen des Verfahrens und der Vorrichtung möglich, ohne vom Konzept der Erfindung abzuweichen. So können, statt wie in Fig. 2 dargestellt, auch mehrere Mineralfaserplatten oder -bahnen gleichzeitig gewalkt werden. So zeigt auch beispielsweise Fig. 3 das gleichzeitige Walken von sechs Mineralfaserplatten 11. Es wäre aber auch möglich, mit der in Fig. 3 schematisch dargestellten Vorrichtung eine Lage statt einer Mehrzahl von Lagen zu bearbeiten.

Auch bei der Walkvorrichtung von Fig. 3 sind Förderbänder 13, 15 und ein Führungsblech 19 vorgesehen. Es können aber statt Förderbänder 13, 15 auch Platten vorgesehen sein. Mit der Bezugsziffer 29 ist das Walkwerkzeug bezeichnet. Es können aber auch mehrere Walkwerkzeuge vorgesehen werden, um das Walken in mehreren Arbeitsgängen durchzuführen. Bezüglich der möglichen Ausbildung der Walkwerkzeuge wird auf die vorhergehende detaillierte Beschreibung verwiesen.

Beim Ausführungsbeispiel von Fig. 3 erstrecken sich die endlosen Förderbänder 13, 15, welche die Mineralfaserplatten 11 oder -bahnen abstützen, über die ganze Breite der Mineralfaserplatte oder -bahnen, also auch über die Walkzone. Das Walkwerkzeug 29 kann sich zwischen den Förderbändern 13, 15 bewegen. Vorteilhaft werden vor dem Walken die Mineralfaserplatten oder -bahnen in der Dicke etwas zusammengedrückt, z.B. um etwa zehn Prozent der Dicke, wie dies bereits in bezug auf die Beschreibung der Figuren 1 und 2 näher beschrieben wurde.

## Patentansprüche

1. Verfahren zum Herstellen einer kompressiblen Zone (23) in mindestens einem Randbereich einer wärme-, schall- und/ oder feuerisolierenden Mineralfaserplatte (11) oder -bahn, in welcher die einzelnen Fasern mit einem Bindemittel zu einem Faserverband verbunden sind, bei welchem Verfahren die Mineralfaserplatte oder -bahn unten und oben geführt durch eine Walkzone (23) bewegt wird und in der Walkzone (23) zwecks Bildung der kompressiblen Zone (23) der Faserverband durch mechanische Einwirkung teilweise aufgelöst wird, dadurch gekennzeichnet, dass bei der Bildung der kompressiblen Zone (23) der nicht zu dieser Zone gehörende Bereich der Mineralfaserplatte (11) oder -bahn auf der Unter- und Oberseite abgestützt und senkrecht zur Platten-bzw.Bahnebene zusammengepresst wird, und dass das Material in der Walkzone (23) durch Führungen (25,27), welche oberhalb und unterhalb der Mineralfaserplatte (11) oder -bahn angeordnet sind, geführt wird, um ein Ausbauchen des Materials zu vermeiden.

2. Verfahren nach Anspruch 1, dadurch gekennzeichnet, dass die Mineralfaserplatte oder -bahn in dem nicht zur kompressiblen Zone (23) gehörenden Bereich um etwa zehn Prozent senkrecht zur Platten- oder -bahnebene zusammengepresst wird.

3. Verfahren nach Anspruch 1 oder 2, dadurch gekennzeichnet, dass die Bildung der kompressiblen Zone (23) in mehreren Schritten erfolgt.

4. Verfahren nach einem der Ansprüche 1 bis 3, dadurch gekennzeichnet, dass das Walken durch mehrfache Hübe eines Walkwerkzeuges (29, 30) beim Durchlauf der Mineralfaserplatte (11) oder -bahn erfolgt.

5. Verfahren nach Anspruch 4, dadurch gekennzeichnet, dass die Anzahl der Hübe pro Laufmeter entsprechend der geforderten Einbaukraft eingestellt wird.

6. Verfahren nach Anspruch 3 bis 5, dadurch gekennzeichnet, dass beim ersten Schritt ein Walken mit etwa zwanzig Prozent mehr Hüben erfolgt als beim zweiten Schritt.

7. Verfahren nach einem der Ansprüche 1 bis 6, dadurch gekennzeichnet, dass das Walken in total vierzig bis fünfundvierzig Hüben vorgenommen wird.

8. Verfahren nach einem der Ansprüche 3 bis 7, dadurch gekennzeichnet, dass beim ersten Schritt ein Walken bis zu etwa acht Zentimetern Tiefe erfolgt und dass beim zweiten Schritt ein Walken bis zu etwa elf Zentimeter Tiefe erfolgt.

9. Verfahren nach einem der Ansprüche 2 bis 8, dadurch gekennzeichnet, dass die Mineralfaserplatte oder -bahn auch in dem zur Walkzone gehörenden Bereich in der Dicke um etwa zehn Prozent dieser Dicke senkrecht zur Plattenebene zusammengepresst werden.

10. Verfahren nach einem der Ansprüche 2 bis 9, dadurch gekennzeichnet, dass eine Mehrzahl von übereinanderliegenden Mineralfaserplatten oder -bahnen gleichzeitig gewalkt werden.

11. Vorrichtung zur Durchführung des Verfahrens nach einem der Ansprüche 1 bis 10, mit mindestens einem Walkwerkzeug (29,30), das derart angeordnet ist, dass es Hin- und Herbewegungen ausführt und dadurch von der Seite her den Randbereich der Mineralfaserplatte (11) oder -bahn walkt, mit endlosen Förderbändern (15,13), welche gleichzeitig der Führung der Mineralfaserplatte (11) oder -bahn und der Erzeugung einer Relativbewegung zwischen Mineralfaserplatte oder -bahn und dem Walkwerkzeug (29,30) dienen, dadurch gekennzeichnet, dass der Abstand zwischen den Förderbändern (15,13) kleiner ist als die Dicke der zu bearbeitenden Mineralfaserplatte (11) oder -bahn, um die Mineralfaserplatte oder -bahn senkrecht zur Platten- bzw. Bahnebene zusammenzupressen, und dass unterhalb und oberhalb der Walkzone (23) eine Führung (25,27) angeordnet ist, um ein Ausbauchen des Materials beim Walken zu vermeiden.

12. Vorrichtung nach Anspruch 11, dadurch gekennzeichnet, dass zwei Walkwerkzeuge (29, 30) vorgesehen sind, wobei das erste Walkwerkzeug (29) dem Vorwalken und das zweite Walkwerkzeug (30) dem Walken auf die ganze Tiefe dient.

13. Vorrichtung nach Anspruch 11 oder 12, dadurch gekennzeichnet, dass jede Führung (25, 27) auf der Innenseite einen Wulst (26, 28) aufweist, welcher sich entlang des den Abstützmitteln (13, 15) benachbarten Randes erstreckt.

14. Vorrichtung nach einem der Ansprüche 11 bis 13, dadurch gekennzeichnet, dass zum Transport der Mineralfaserplatte (11) und zur Abstützung des nicht zur Walkzone (23) gehörenden Bereichs der Mineralfaserplatte (11) oder -bahn endlose Noppenbänder (15) vorgesehen sind.

15. Vorrichtung nach einem der Ansprüche 11 bis 14, dadurch gekennzeichnet, dass das jeweilige Walkwerkzeug (29, 30) einen Stempel (32) aufweist, der eine ungefähr zylindrisch gewölbte Fläche (31) besitzt.

16. Vorrichtung nach Anspruch 15, dadurch gekennzeichnet, dass der Stempel (32) mit einem endlosen Band (37) versehen ist, welches über die zylindrisch gewölbte Fläche (31) verläuft und mit praktisch doppelten Geschwindigkeit wie die Mineralfaserplatte (11) oder -bahn und im Gleichlauf mit derselben bewegt wird.

17. Vorrichtung nach Anspruch 16, dadurch gekennzeichnet, dass der Stempel (32) an jedem Ende der gewölbten Fläche (31) eine Umlenkrolle (39) für das endlose Band (37) aufweist.

18. Vorrichtung nach Anspruch 17, dadurch gekennzeichnet, dass der Stempel (32) im Bereich einer Umlenkrolle (39) eine Schwenkachse (41) aufweist, um welche er verschwenkbar ist, und dass in einem Abstand von der Schwenkachse ein Arm (42) eines Kurbeltriebs angelenkt ist, um den Stempel (32) hin und her zu schwenken.

19. Vorrichtung nach einem der Ansprüche 11 bis 18, dadurch gekennzeichnet, dass die Mittel (13, 15), z.B. Platten oder endlose Förderbänder, welche die Mineralfaserplatte (11) oder -bahn unten und oben abstützen, sich auch über die Walkzone erstrecken.

20. Mineralfaserplatte oder -bahn, hergestellt nach dem Verfahren gemäss einem der Ansprüche 1 bis 10.

21. Mineralfaserplatte nach Anspruch 20, dadurch gekennzeichnet, dass sie beim Einbau pro Laufmeter eine Kraft von achtzehn bis fünfundzwanzig Kilogramm erfordert.

## Claims

1. A method of producing a compressible zone (23) in at least one edge region of a heat, sound and/or fire-insulating mineral fibre plate (11) or web, in which the individual fibres are joined by a binder to form a bunch of fibres, and in the method the mineral fibre plate or web is guided at bottom and top and moved through a squeezing zone (23) and in the squeezing zone (23), in order to form the compressible zone (23), the bunch of fibres is partly broken up by mechanical action, characterised in that when the compressible zone (23) is being formed, the region of the mineral fibre plate (11) or web not belonging to this zone is braced on the underside and top side and compressed at right angles to the plate or web plane, and the material in the squeezing zone (23) is conveyed through guides (25, 27) which are disposed above or below the mineral fibre plate (11) or web to prevent the material from bulging.

2. A method according to claim 1, characterised in that the mineral fibre plate or web, in the region not belonging to the compressible zone (23), is compressed by about 10% at right angles to the plate or web plane.

3. A method according to claim 1 or 2, characterised in that the compressible zone (23) is formed in a number of steps.

4. A method according to any of claims 1 to 3, characterised in that squeezing is brought about by repeated strokes of a squeezing tool (29, 30) during the passage of the mineral fibre plate (11) or web.

5. A method according to claim 4, characterised in that the number of strokes per linear metre is adjusted in accordance with the force required for installation.

6. A method according to claims 3 to 5, characterised in that in the first step, squeezing is applied with about 20% more strokes than in the second step.

7. A method according to any of claims 1 to 6, characterised in that squeezing is brought about in a total of 40 to 45 strokes.

8. A method according to any of claims 3 to 7, characterised in that in the first step, squeezing is brought about to a depth of about 8 centimetres, and to about 11 centimetres in the second step.

9. A method according to any of claims 2 to 8, characterised in that the mineral fibre plate or web, in the region belonging to the squeezed zone also, is compressed in thickness by about 10% of the thickness at right angles to the plane of the plate.

10. A method according to any of claims 2 to 9, characterised in that a plurality of superposed mineral fibre plates or webs are simultaneously squeezed.

11. A device for working the method according to any of claims 1 to 10, comprising at least one squeezing tool (29, 30) disposed so as to move in reciprocation and thus squeeze the edge region of the mineral fibre plate (11) or web from the side, the device comprising endless conveyor belts (15, 13) which simultaneously guide the mineral fibre plate (11) or web and move the mineral fibre plate or web relative to the squeezing tool (29, 30), characterised in that the distance between the conveyor belts (15, 13) is less than the thickness of the mineral fibre plate (11) or web for processing, in order to compress the mineral fibre (8) or web at right angles to the plate or web plane, and a guide (25, 27) is disposed below and above the squeezed zone (23) to prevent the material bulging when squeezed.

12. A device according to claim 11, characterised in that two squeezing tools (29, 30) are provided, the first squeezing tool (29) being used for preliminary squeezing and the second tool (30) for squeezing over the entire depth.

13. A device according to claim 11 or 12, characterised in that each guide (25, 27) on the inside has a bead (26, 28) which extends along the edge adjacent the bracing means (13, 15).

14. A device according to any of claims 11 to 13, characterised in that endless knobbed belts (15) are provided for conveying the mineral fibre plate (11) and for bracing the regions of the mineral fibre plate (11) or web not belonging to the squeezing zone (23).

15. A device according to any of claims 11 to 14, characterised in that each squeezing tool (29, 30) has a punch (32) having an approximately cylindrically curved surface (31).

16. A device according to claim 15, characterised in that the punch (32) has an endless belt (37) which runs over the cylindrically curved surface (31) and is moved at practically twice the speed of the mineral fibre plate (11) or web and in the same direction.

17. A device according to claim 16, characterised in that at each end of the curved surface (31), the punch (32) has a pulley (39) for guiding the endless belt (37).

18. A device according to claim 17, characterised in that in the region of a pulley (39), the punch (32) has a pivot (41) around which it is pivotable, and an arm (42) of a crank gear is disposed at a distance from the pivot in order to pivot the punch (32) in reciprocation.

19. A device according to any of claims 11 to 18, characterised in that the means (13, 15), e.g. plates or endless conveyor belts, which brace the mineral fibre plate (11) or web at the bottom or top, extend over the squeezed zone.

20. A mineral fibre plate or web produced by the method according to any of claims 1 to 10.

21. A mineral fibre plate according to claim 20, characterised in that it requires a force of 18 to 25 kilograms per linear metre during installation.

## Revendications

1. Procédé de formation d'une zone compressible (23), au moins dans une région bordante d'une plaque ou d'une bande (11) d'isolation thermique, acoustique et/ou pare-feu en fibres minérales, dans laquelle les fibres individuelles sont unies en un matériau composite fibreux par un liant, procédé dans lequel la plaque ou bande en fibres minérales est entraînée à travers une zone de foulage (23) en étant guidée en bas et en haut et le matériau composite fibreux est dissocié partiellement par action mécanique, dans la zone de foulage (23), en vue de la formation de la zone compressible (23), caractérisé en ce qu'au cours de la formation de la zone compressible (23), la région de la plaque (11) ou bande en fibres minérales qui n'appartient pas à cette zone est supportée du côté inférieur et du côté supérieur et est comprimée perpendiculairement au plan de la plaque ou bande, et en ce que le matériau est guidé, dans la zone de foulage (23), par des guides (25, 27) qui sont disposés au-dessus et au-dessous de la plaque (11) ou bande en fibres minérales, afin d'empêcher un bombement du matériau.

2. Procédé selon la revendication 1, caractérisé en ce que, dans la région qui n'appartient pas à la zone compressible (23), la plaque ou bande en fibres minérales est comprimée d'environ 10%, perpendiculairement au plan de la plaque ou bande.

3. Procédé selon la revendication 1 ou 2, caractérisé en ce que la formation de la zone compressible (23) s'effectue en plusieurs étapes.

4. Procédé selon l'une quelconque des revendications 1 à 3, caractérisé en ce que le foulage est effectué par des courses multiples d'un outil de foulage (29, 30) au cours du passage de la plaque (11) ou bande en fibres minérales.

5. Procédé selon la revendication 4, caractérisé en ce que le nombre des courses par mètre courant est réglé de façon à correspondre à la force d'installation exigée.

6. Procédé selon l'une quelconque des revendications 3 à 5, caractérisé en ce qu'il est effectué, dans la première étape, un foulage avec un nombre de courses supérieur d'environ 20% à celui de la deuxième étape.

7. Procédé selon l'une quelconque des revendications 1 à 6, caractérisé en ce que le foulage est effectué en un total de 40 à 45 courses.

8. Procédé selon l'une quelconque des revendications 3 à 7, caractérisé en ce que, dans la première étape, il est effectué un foulage jusqu'à environ 8 cm de profondeur et en ce que, dans la deuxième étape, il est effectué un foulage jusqu'à environ 11 cm de profondeur.

9. Procédé selon l'une quelconque des revendications 2 à 8, caractérisé en ce que, dans la région qui appartient à la zone de foulage, la plaque ou bande en fibres minérales est également comprimée en épaisseur, d'environ 10% de cette épaisseur, perpendiculairement au plan de la plaque.

10. Procédé selon l'une quelconque des revendications 2 à 9, caractérisé en ce que plusieurs plaques ou bandes en fibres minérales superposées sont foulées en même temps.

11. Dispositif pour l'éxécution du procédé selon l'une quelconque des revendications 1 à 10, comportant au moins un outil de foulage (29, 30) qui est agencé de façon à effectuer des mouvements de va-et-vient et, de la sorte, à fouler par le côté la région bordante de la plaque (11) ou bande en fibres minérales, ainsi que des bandes transporteuses sans fin (15, 13) qui servent en même temps à guider la plaque (11) ou bande en fibres minérales et à produire un mouvement relatif entre la plaque ou bande en fibres minérales et l'outil de foulage (29, 30), caractérisé en ce que l'écart entre les bandes transporteuses (15, 13) est plus petit que l'épaisseur de la plaque (11) ou bande en fibres minérales à traiter, afin de comprimer la plaque ou bande en fibres minérales perpendiculairement au plan de cette plaque ou bande, et en ce qu'il est disposé, au-dessous et au-dessus de la zone de foulage (23) , un guide (25, 27) pour empêcher un bombement du matériau au cours du foulage.

12. Dispositif selon la revendication 11, caractérisé en ce que deux outils de foulage (29, 30) sont prévus, le premier outil de foulage (29) servant au pré-foulage et le second outil de foulage (30) servant au foulage à la pleine profondeur.

13. Dispositif selon la revendication 11 ou 12, caractérisé en ce que chaque guide (25, 27) présente, du côté intérieur, un bourrelet (26, 28) qui s'étend le long du bord voisin des moyens de soutien (13, 15).

14. Dispositif selon l'une quelconque des revendications 11 à 13, caractérisé en ce que des bandes sans fin à boutons (15) sont prévues pour le transport de la plaque en fibres minérales (11) et pour le soutien de la région de la plaque (11) ou bande en fibres minérales n'appartenant pas à la zone de foulage (23).

15. Dispositif selon l'une quelconque des revendications 11 à 14, caractérisé en ce que chaque outil de foulage (29, 30) comporte un pilon (32) qui présente une surface bombée (31) de forme à peu près cylindrique.

16. Dispositif selon la revendication 15, caractérisé en ce que le pilon (32) est muni d'une bande sans fin (37) qui passe sur la surfaces bombée de forme cylindrique (31) et qui est entraînée à une vitesse pratiquement double de celle de la plaque (11) ou bande en fibres minérales et dans le même sens que celle-ci.

17. Dispositif selon la revendication 16, caractérisé en ce que le pilon (32) comporte, à chaque extrémité de la surface bombée (31), un rouleau de renvoi (39) pour la bande sans fin (37).

18. Dispositif selon la revendication 17, caractérisé en ce que le pilon (32) présente, dans la région d'un rouleau de renvoi (39), un axe de pivotement (41) autour duquel il peut pivoter, et en ce qu'un bras (42) d'un mécanisme à bielle et manivelle s'articule à distance de cet axe de pivotement pour communiquer un mouvement pivotant de va-et-vient au pilon (32).

19. Dispositif selon l'une quelconque des revendications 11 à 18, caractérisé en ce que les moyens (13, 15), par exemple des plaques ou des bandes transporteuses sans fin, qui supportent par en bas et par en haut la plaque (11) ou bande en fibres minérales s'étendent également dans la zone de foulage.

20. Plaque ou bande en fibres minérales, fabriquée par le procédé selon l'une quelconque des revendications 1 à 10.

21. Plaque en fibres minérales selon la revendication 20, caractérisée en ce qu'elle exige pour son installation, par mètre courant, une force de 18 à 25 kg.
